# EUROPÄISCHE PATENTSCHRIFT

(11) **EP 3 600 932 B1**
(45) Veröffentlichungstag und Bekanntmachung des Hinweises auf die Patenterteilung: **28.04.2021**
(21) Anmeldenummer: 18713186.7
(22) Anmeldetag: 21.03.2018
(51) Int. Cl.: B60J 10/70

(54) **KRAFTFAHRZEUGANRODNUNG MIT MAGNETISCHER WASSERKASTENABDECKUNG**
VEHICLEASSEMBLY WITH MAGNETIC COWL
ASSEMBLAGE D'UNE VITRE DE VEHICULE ET D'UN ELEMENT CONTIGU MAGNETIQUE

(30) Priorität: 31.03.2017 DE 202017101894 U
(43) Veröffentlichungstag der Anmeldung: 05.02.2020
(73) Patentinhaber: Elkamet Kunststofftechnik GmbH, 35216 Biedenkopf (DE)
(72) Erfinder: BERGMANN, Lutz, 35630 Ehringshausen (DE); BURK, Carsten, 35232 Dautphetal (DE); HAIN, Christoph, 35236 Breidenbach (DE); HAIN, Marco, 35713 Eschenburg (DE); LANDECK, David, 35037 Marburg (DE); LOEHNERT, Jens, 35102 Lohra (DE); ORTMUELLER, Michael, 35232 Dautphetal-Herzhausen (DE); ROTH, Hartmut, 35216 Biedenkopf (DE); SCHNEIDER, Marcus, 35232 Dautphetal (DE)
(74) Vertreter: DREISS Patentanwälte PartG mbB
(86) Internationale Anmeldenummer: PCT/EP2018/057092
(87) Internationale Veröffentlichungsnummer: WO 2018/177830

(56) Entgegenhaltungen:
- DE-A1-102011 087 739
- DE-U1-202008 006 986
- JP-A- H0 487 831

## Beschreibung

Die Erfindung betrifft eine Kraftfahrzeuganordnung, umfassend eine Windschutzscheibe, eine an der Windschutzscheibe befestigte Profilleiste und eine an die Profilleiste angrenzende Wasserkastenabdeckung, wobei eine Verbindungseinrichtung vorgesehen ist, die einen ersten, der Profilleiste zugeordneten Verbindungsabschnitt und einen zweiten, der Wasserkastenabdeckung zugeordneten Verbindungsabschnitt umfasst.

Kraftfahrzeuganordnung der vorstehend genannten Art sind beispielsweise aus der DE 200 08 555 U1 und der DE 20 2008 006 986 U1 bekannt. Die Profilleisten dieser Kraftfahrzeuganordnungen dienen dazu, einen unteren Randbereich einer Windschutzscheibe eines Kraftfahrzeugs mit einer angrenzenden Wasserkastenabdeckung zu verbinden. Eine Wasserkastenabdeckung dient zur Abdeckung eines Wasserkastens, der von der Fahrzeugscheibe abfließendes Wasser aufnimmt und kontrolliert in den Motorraum und unter das Fahrzeug ableitet. Der Wasserkasten kann Bestandteil der Fahrzeugkarosserie oder beispielsweise als Kunststoffbauteil separat bereitgestellt sein.

Bei den Kraftfahrzeuganordnungen der DE 200 08 555 U1 und der DE 20 2008 006 986 U1 ist eine Profilleiste mit einem Verbindungsabschnitt in Form eines U- oder nutförmigen Aufnahmebereichs vorgesehen. Die Wasserkastenabdeckung weist einen Verbindungsabschnitt in Form eines Befestigungsstegs auf. Zur Verbindung der Wasserkastenabdeckung mit der Profilleiste wird der Befestigungssteg der Wasserkastenabdeckung in den Aufnahmebereich der Profilleiste eingesteckt und dort verrastet.

Die vorstehend beschriebene Montage wird üblicherweise im Rahmen der Endmontage eines Kraftfahrzeugs bei Kraftfahrzeugherstellern durchgeführt. Nachfolgend wird erläutert, welche Herstellungs- und Verfahrensschritte vor dieser Endmontage bei Zuliefern durchgeführt werden.

Die Profilleiste und die Windschutzscheibe werden üblicherweise bei einem oder mehreren Zulieferern hergestellt. Anschließend wird die Profilleiste mit dem Randbereich der Windschutzscheibe verbunden, üblicherweise verklebt. Somit entsteht eine Baugruppe, welche die Windschutzscheibe und die mit der Windschutzscheibe verbundene Profilleiste umfasst. Diese Baugruppe wird dann von einem der Zulieferer an den Kraftfahrzeughersteller geliefert. Dort wird die Windschutzscheibe mit einer Windschutzscheibenaufnahme einer Kraftfahrzeugkarosserie verbunden; außerdem wird die Wasserkastenabdeckung mit der Profilleiste gefügt und verrastet (s.o.).

Während des Transports der Baugruppe "Windschutzscheibe und Profilleiste" von dem Zulieferer zu dem Kraftfahrzeughersteller ragt der Verbindungsabschnitt der Profilleiste, also der Materialabschnitt, der den U- oder nutförmigen Aufnahmebereich begrenzt, von der Profilleiste und der Windschutzscheibe ab und ist somit mechanischen Einflüssen ausgesetzt. Gleichzeitig ist es aber erwünscht, dass die genannte Baugruppe platzsparend und "stehend" transportiert werden kann, dass also die Windschutzscheibe hochkant transportiert werden kann. Außerdem ist es erwünscht, dass die Windschutzscheibe während des Transports gegen eine Beschädigung des unteren Randbereichs geschützt ist. Ein solcher Schutz ist dadurch gewährleistet, dass sich die Windschutzscheibe während ihres Transports auf dem Verbindungsabschnitt der Profilleiste abstützt. Dies bedeutet aber, dass das Gewicht der Windschutzscheibe während des Transports der Baugruppe auf dem Verbindungsabschnitt der Profilleiste lastet. Diese Belastung bewirkt eine unerwünschte Verformung (Stauchung) des den Aufnahmebereich begrenzenden Verbindungsabschnitts der Profilleiste.

Zur Vermeidung einer Verformung einer mit einer Windschutzscheibe verbundenen Profilleiste ist es aus dem Stand der Technik (beispielsweise aus der WO 2006/002891 A2, der EP 2 253 556 A1 und der WO 2014/041279 A1) bekannt, den Verbindungsabschnitt der Profilleiste dadurch zu versteifen, dass eine Transportschutzleiste (auch "Keder" genannt) verwendet wird, die mit zumindest einem Teilbereich ihres Querschnitts in dem Aufnahmebereich des Verbindungsabschnitts angeordnet wird.

Nach Anlieferung der Baugruppe "Windschutzscheibe und Profilleiste" bei dem Kraftfahrzeughersteller wird die Transportschutzleiste wieder aus dem Aufnahmebereich der Profilleiste entfernt, damit der Verbindungsabschnitt mit dem angrenzenden Kraftfahrzeugbauteil, insbesondere mit der Wasserkastenabdeckung, verbunden werden kann. Die Transportschutzleiste wird anschließend entsorgt.

Zur Entfernung der Transportschutzleiste aus dem Aufnahmebereich des Verbindungsabschnitts der Profilleiste schlägt die EP 2 253 556 A1 vor, an der Transportschutzleiste einen zusätzlichen Handhabungsabschnitt in Form einer Grifflasche vorzusehen, sodass die Transportschutzleiste durch manuelles Ziehen an der Grifflasche aus dem Aufnahmebereich der Profilleiste herausgezogen werden kann. Ein ähnlicher Handhabungsabschnitt in Form eines Ausziehrings ist aus der WO 2014/041279 A1 bekannt.

Die vorstehend genannten, zusätzlichen Handhabungsabschnitte vereinfachen die Entfernung der Transportschutzleiste aus dem Aufnahmebereich der Profilleiste. Die Transportschutzleiste und die Handhabungsabschnitte müssen aber zunächst als Einzelteile hergestellt werden und dann vom Zulieferer an der Profilleiste montiert werden. Nach dem Transport der Baugruppe zu dem Kraftfahrzeughersteller muss der Kraftfahrzeughersteller die Transportschutzleiste und die Handhabungsabschnitte dann wieder demontieren. Schließlich müssen die Transportschutzleiste und die Handhabungsabschnitte gesammelt und entsorgt werden.

Bei den aus dem Stand der Technik bekannten Kraftfahrzeuganordnungen ist weiterhin nachteilig, dass zur Verbindung der Wasserkastenabdeckung mit der Profilleiste eine bestimmte Fügerichtung vorgegeben ist und eingehalten werden muss. Auch die Winkellage der Wasserkastenabdeckung relativ zu der Baugruppe "Windschutzscheibe und Profilleiste" muss innerhalb enger Grenzen eingehalten werden, damit die Montage gelingt.

Eine Kraftfahrzeuganordnung mit den Merkmalen des Oberbegriffs des Patentanspruchs 1 ist aus der DE 10 2011 087 739 A1 bekannt. Hiervon ausgehend liegt der vorliegenden Erfindung die Aufgabe zugrunde, eine einfacher herstellbare Kraftfahrzeuganordnung anzugeben.

Diese Aufgabe wird bei einer Kraftfahrzeuganordnung mit den Merkmalen des Oberbegriffs des Patentanspruchs 1 erfindungsgemäß durch die kennzeichnenden Merkmale des Patentanspruchs 1 gelöst.

Die erfindungsgemäße Kraftfahrzeuganordnung ermöglicht es, eine einfach aufgebaute Verbindungseinrichtung zu schaffen, die zwischen Wasserabdeckung und Profilleiste wirksam ist. Durch die Verwendung der Magnetelemente ist es möglich, die Geometrie der Verbindungsabschnitte der Wasserkastenabdeckung und der Profilleiste zu vereinfachen. Insbesondere kann der Verbindungsabschnitt der Profilleiste robuster ausgestaltet werden als bei einer Kraftfahrzeuganordnung, bei welcher ein Befestigungssteg einer Wasserkastenabdeckung in einen U- oder nutförmigen Aufnahmebereich einer Profilleiste rastend eingesetzt wird. Dies wiederum ermöglicht es, auf einen Keder zum Transportschutz eines U- oder nutförmigen Aufnahmebereichs einer Profilleiste verzichten zu können, was wiederum bedeutet, dass dieser nicht aufwändig hergestellt, montiert, anschließend entfernt und schließlich entsorgt werden muss.

Die zwischen den Magnetelementen der Wasserkastenabdeckung und der Profilleiste wirkenden Magnetkräfte sind ausreichend hoch, um ein unbeabsichtigtes Entfernen der Wasserkastenabdeckung von der Profilleiste zu verhindern. Gleichzeitig ist es jedoch möglich, die Wasserkastenabdeckung bei Bedarf von der Profilleiste abheben und entfernen zu können und anschließend wieder montieren zu können. Die erfindungsgemäße Verbindungseinrichtung ermöglicht eine mehrfache und verschleißfreie Montage und Demontage der Wasserkastenabdeckung.

Die Montage der erfindungsgemäßen Kraftfahrzeuganordnung gestaltet sich als sehr einfach. Insbesondere ist es nicht erforderlich, während der Montage der Wasserkastenabdeckung eine genaue Winkel- und Fügelage der Wasserkastenabdeckung relativ zu der Profilleiste einzuhalten.

"Magnetisch miteinander zusammenwirken" ist im Sinne der Erfindung dahingehend zu verstehen, dass die Magnetelemente so ausgebildet sind, dass die Verbindungsabschnitte der Profilleiste und der Wasserkastenabdeckung lösbar miteinander verbunden sind. Das erste und/oder das zweite Magnetelement kann z.B. dauermagnetisch oder magnetisiert oder magnetisierbar sein. Erfindungsgemäß baut zumindest eines der Magnetelemente ein Magnetfeld auf.

Die Erfindung umfasst alle Möglichkeiten, mit denen zwischen dem ersten und dem zweiten Magnetelement magnetische Kräfte erzeugt werden können. So kann eines der Magnetelemente ein Magnet sein, während das jeweils andere Magnetelement zumindest magnetisierbar, optional aber auch selbst magnetisch ist.

Das erste und/oder das zweite Magnetelement kann aus einem Material mit einer magnetischen Suszeptibilität χ > 0 bestehen oder ein solches Material umfassen. Die magnetische Suszeptibilität gibt die Magnetisierbarkeit von Materie in einem externen Magnetfeld an. Die magnetische Permeabilität µᵣ (auch magnetische Leitfähigkeit) bestimmt die Durchlässigkeit von Materie für magnetische Felder. Da die magnetische Suszeptibilität χ und die relative magnetische Permeabilität µr eines Stoffes durch die Beziehung X = µᵣ - 1 miteinander verknüpft sind, haben geeignete Materialien zugleich eine relative Permeabilität (oder Permeabilitätszahl) µᵣ > 1. Die Suszeptibilität lässt sich experimentell bspw. mit einer Gouyschen Waage oder mit einer Faraday-Waage bestimmen.

Das erste und/oder das zweite Magnetelement kann dabei paramagnetisch sein, es ist jedoch bevorzugt ferromagnetisch, ferrimagnetisch oder superparamagnetisch. Zumindest das erste oder das zweite Magnetelement muss magnetisiert sein und somit dauermagnetische Eigenschaften aufweisen. Es ist auch möglich, dass sowohl das erste und das zweite Magnetelement dauermagnetische Eigenschaften aufweisen.

Ferromagnetische Materialien enthalten Elementarmagnete, die parallel zueinander ausgerichtet sein können. Das bedeutet, dass Stücke dieser Materialien vom Magnetpol eines äußeren Magnetfelds angezogen werden oder - wenn sie magnetisiert sind - sogar selbst ein statisches Magnetfeld aufweisen. Beispiele für ferromagnetische Materialien sind α-Eisen, Kobalt, Nickel.

Ferrimagnetische Stoffe besitzen eine Kristallstruktur, bei der innerhalb bestimmter Bereiche (sogenannte Weiss-Bezirke) die magnetischen Momente der Atome jeweils abwechselnd antiparallel ausgerichtet und dabei betragsmäßig unterschiedlich sind. Zu den Material-Gruppen mit ferrimagnetischen Eigenschaften gehören die Ferrite.

Paramagnetische Stoffe weisen nur so lange eine von Null verschiedene Magnetisierung auf, wie sie sich in einem externen Magnetfeld befinden. Die regellos angeordneten magnetischen Momente eines Atoms oder eines Moleküls richten sich teilweise in einem externen Magnetfeld so aus, dass sich das Magnetfeld im Inneren des paramagnetischen Stoffes verstärkt, jedoch nur solange das äußere Magnetfeld existiert. Paramagnetische Materialien werden in ein Magnetfeld hineingezogen. Beispiele für paramagnetische Stoffe sind Aluminium, Natrium, α-Mangan, Sauerstoff.

Superparamagnetismus bezeichnet die magnetische Eigenschaft sehr kleiner Teilchen eines ferromagnetischen oder ferrimagnetischen Materials, auch bei Temperaturen unterhalb der Curie-Temperatur T_{c} keine bleibende Magnetisierung zu halten, wenn ein zuvor angelegtes Magnetfeld abgeschaltet wurde.

Um eine magnetische Wechselwirkung zu erzielen, ist bevorzugt zumindest das erste oder das zweite Magnetelement ein Dauermagnet. Die Magnetisierung erfolgt vorteilhaft nach der Herstellung des Bauteils durch Einwirkung eines externen Magnetfeldes in an sich bekannter Weise. Im Fall der Profilleiste kann die Magnetisierung des ersten Magnetelements bevorzugt in einem kontinuierlichen Prozess erfolgen, indem das Profil zwischen den Polen eines externen Magneten hindurchgeführt wird. Dieser externe Magnet kann ein Permanentmagnet oder bevorzugt ein Elektromagnet sein.

Im Rahmen der Erfindung ist es möglich, dass sich - in einem Zustand, in welchem die Verbindungsabschnitte miteinander verbunden sind - die Magnetelemente berühren. Dies ermöglicht die Verwendung vergleichsweise kleiner Magnetelemente, die einander entlang zumindest einer Kontaktlinie oder im Bereich einer Kontaktfläche berühren.

Alternativ hierzu ist es möglich, dass - in einem Zustand, in welchem die Verbindungsabschnitte miteinander verbunden sind - die Magnetelemente voneinander beabstandet sind. Dies ermöglicht eine besonders unauffällige und verliersichere Integration der Magnetelemente in die Profilleiste und/oder die Wasserkastenabdeckung.

Erfindungsgemäß ist es möglich, dass das erste Magnetelement als erstes Zusatzelement separat von der Profilleiste bereitgestellt und insbesondere formschlüssig mit der Profilleiste verbunden ist und/oder dass das zweite Magnetelement als zweites Zusatzelement separat von der Wasserkastenabdeckung bereitgestellt und insbesondere formschlüssig mit der Wasserkastenabdeckung verbunden ist. Ein solches Zusatzelement kann beispielsweise durch einen magnetisierbaren Draht gebildet sein. Ein solcher Draht kann im Querschnitt insbesondere kreisförmig sein. Der Draht kann aber auch hiervon abweichende Querschnittsformen aufweisen. Die Magnetisierung eines solchen Zusatzelements kann vor oder nach der Montage des Zusatzelements an oder in der Profilleiste oder der Wasserkastenabdeckung erfolgen.

Eine besonders einfache Möglichkeit der Integration eines Zusatzelements in die Profilleiste oder die Wasserkastenabdeckung besteht darin, dass das Zusatzelement bei oder während der Herstellung der Profilleiste oder der Wasserkastenabdeckung mit eingeformt wird. Beispielsweise kann das Zusatzelement im Zuge der Extrusion der Profilleiste mit eingebracht und von dem extrudierten Material zumindest abschnittsweise umformt werden. Die Wasserkastenabdeckung kann beispielsweise im Wege des Spritzgießens hergestellt sein, wobei das Zusatzelement innerhalb der Spritzgussform angeordnet und dann von eingespritztem Kunststoffmaterial umformt wird.

Darüber hinaus ist es möglich, ein Zusatzelement nachträglich mit der Profilleiste oder der Wasserkastenabdeckung zu verbinden, beispielsweise indem in der Profilleiste oder der Wasserkastenabdeckung eine Ausnehmung vorgesehen ist, in welche hinein das Zusatzelement einsetzbar ist und dort insbesondere rastend festlegbar ist.

Zusätzlich oder alternativ zu der Verwendung eines Zusatzelements ist es möglich, dass die Profilleiste und/oder die Wasserkastenabdeckung einen aus einem Kunststoffmaterial hergestellten Hauptkörper und einen Materialabschnitt aufweist bzw. aufweisen, der bzw. die mit einem magnetischen oder magnetisierbaren Zusatzwerkstoff versehen oder durch einen solchen gebildet ist bzw. sind. Solche Bauteile können beispielsweise im Wege eines Mehrkomponentenextrusions- oder Spritzgießverfahrens hergestellt werden. Der Zusatzwerkstoff kann beispielsweise durch ferromagnetische Partikel gebildet sein, die in einen Materialabschnitt der Profilleiste bzw. der Wasserkastenabdeckung eingebracht werden. Alternativ hierzu ist es auch möglich, das gesamte Kunststoffmaterial der Profilleiste und/oder das gesamte Kunststoffmaterial der Wasserkastenabdeckung mit einem magnetischen oder magnetisierbaren Zusatzwerkstoff zu versehen.

Bei einer Ausführungsform der Erfindung ist vorgesehen, dass das erste Magnetelement strangförmig ist und sich parallel zu der Längsachse der Profilleiste erstreckt und/oder dass das zweite Magnetelement strangförmig ist und sich parallel zu der Längsachse der Wasserkastenabdeckung erstreckt. Ein solcher Strang ist vorzugsweise prismenförmig ausgebildet, beispielsweise zylindrisch. Eine solche Strangform ermöglicht es, ein kompaktes Magnetelement bereitstellen zu können.

Erfindungsgemäß ist vorgesehen, dass das erste Magnetelement eine konkav gekrümmte, dem zweiten Magnetelement zugewandte Begrenzungsfläche aufweist oder dass das zweite Magnetelement eine konkav gekrümmte, dem ersten Magnetelement zugewandte Begrenzungsfläche aufweist. Solche Begrenzungsflächen können beispielsweise als formschlüssig wirkende Verbindungsflächen genutzt werden; außerdem ist es möglich, bei sich einander berührenden Magnetelementen eine Kontaktfläche zwischen den Magnetelementen der Wasserkastenabdeckung und der Profilleiste zu vergrößern. Eine konkav gekrümmte Begrenzungsfläche ist außerdem insbesondere vorteilhaft, wenn das andere Magnetelement strangförmig ausgebildet ist. Dies ermöglicht ein magnetisches Zusammenwirken der Magnetelemente in mehreren, zueinander winkelversetzten Richtungen.

Im Rahmen der Erfindung ist es möglich, dass das erste Magnetelement entlang der Längsachse der Profilleiste gesehen einstückig ist oder eine Mehrzahl von Magnetelementsegmenten aufweist und/oder dass das zweite Magnetelement entlang der Längsachse der Wasserkastenabdeckung gesehen einstückig ist oder eine Mehrzahl von Magnetelementsegmenten aufweist. Einstückige Magnetelemente vereinfachen die Herstellung der Profilleiste bzw. der Wasserkastenabdeckung. Eine Mehrzahl von Magnetelementsegmenten ermöglicht eine Gewichtsersparnis. Darüber hinaus können mit Magnetelementsegmenten weitere, nachfolgend beschriebene Funktionen realisiert werden.

Vorzugsweise sind entlang der Längsachsen der Profilleiste und der Wasserkastenabdeckung gesehen mindestens zwei zueinander beabstandete Paare von Magnetelementsegmenten vorgesehen, wobei jedes Paar miteinander magnetisch zusammenwirkende Magnetelementsegmente aufweist, von denen ein erstes Magnetelementsegment der Profilleiste und ein zweites Magnetelementsegment der Wasserkastenabdeckung zugeordnet ist. Es sind also mindestens vier Magnetelementsegmente vorgesehen, die als zwei Paare von Magnetelementsegmenten miteinander zusammenwirken, sodass eine Verbindung von Wasserkastenabdeckung und Profilleiste im Bereich der mindestens zwei Paare erfolgt. Auf diese Weise ist die Wasserkastenabdeckung entlang ihrer Längsachse gesehen an zumindest zwei Stellen an der Profilleiste befestigt.

Es ist bei einer besonders bevorzugten Ausführungsform der Erfindung aber auch möglich, dass zumindest ein erstes Paar von Magnetelementsegmenten vorgesehen ist, deren Magnetelementsegmente gleichgerichtete erste Magnetisierungsrichtungen aufweisen, und dass zumindest ein zweites Paar von Magnetelementsegmenten vorgesehen ist, deren Magnetelementsegmente gleichgerichtete zweite Magnetisierungsrichtungen aufweisen und dass die ersten Magnetisierungsrichtungen entgegengesetzt zu den zweiten Magnetisierungsrichtungen verlaufen. Die Magnetisierungsrichtungen jeweils eines Paars von Magnetelementsegmenten sind also gleichgerichtet, so dass prinzipiell jedes Paar von Magnetelementsegmenten Kräfte erzeugt, welche die Wasserkastenabdeckung und die Profilleiste miteinander verbinden. Dadurch, dass die Magnetisierungsrichtungen eines ersten Paars entgegengesetzt zu den Magnetisierungsrichtungen eines zweiten Paars verlaufen, ist es jedoch möglich, eine Anordnung zu schaffen, welche eine falsche Positionierung der Wasserkastenabdeckung relativ zu der Profilleiste verhindert. Wenn die Wasserkastenabdeckung in Längsrichtung gesehen zu einer Sollposition versetzt angeordnet ist (also in Fahrzeugquerrichtung eine falsche Position einnimmt), steht ein Magnetelementsegment (welches eine erste Magnetisierungsrichtung aufweist) eines ersten Paars einem Magnetelementsegment (welches eine entgegengesetzte zweite Magnetisierungsrichtung aufweist) eines zweiten Paars gegenüber. Auf diese Weise kann im Bereich dieser (relativ zueinander falsch positionierten) Magnetelementsegmente eine Abstoßkraft erzeugt werden, die verhindert, dass die falsch positionierte Wasserkastenabdeckung mit der Profilleiste gefügt wird.

Bei einer weiteren Ausführungsform der Erfindung ist vorgesehen, dass die Verbindungsabschnitte miteinander formschlüssig verbindbar oder verbunden sind. Auf diese Weise kann eine Mehrfachverbindung zwischen der Wasserkastenabdeckung der Profilleiste geschaffen werden, welche eine formschlüssige Verbindung der Verbindungsabschnitte und zusätzlich eine magnetische Verbindung zwischen den Verbindungsabschnitten umfasst.

Es ist auch möglich, dass das erste Magnetelement und das zweite Magnetelement miteinander formschlüssig verbindbar oder verbunden sind. Auch hierdurch kann eine Mehrfachverbindung geschaffen werden, die einen Formschluss und magnetische Haltekräfte umfasst.

Der vorstehend genannte Formschluss kann entlang einer Längsachse und/oder einer Querachse der Kraftfahrzeuganordnung wirksam sein, wobei die Längsachse und die Querachse sich auf den an einem Kraftfahrzeug eingebauten Zustand der Windschutzscheibe beziehen. Ein solcher Formschluss ermöglicht die Fixierung der Wasserkastenabdeckung innerhalb zumindest einer Richtung einer Erstreckungsebene der Windschutzscheibe.

Es ist auch möglich, dass der Formschluss entlang einer Hochachse der Kraftfahrzeuganordnung wirksam ist, wobei die Hochachse sich auf den an einem Kraftfahrzeug eingebauten Zustand der Windschutzscheibe bezieht. Dieser Formschluss wirkt einem Abheben der Wasserkastenabdeckung von der Profilleiste entgegen, also der Bewegung oder Entfernung der Wasserkastenabdeckung in einer Richtung im wesentlichen parallel zu einer Normalen der Erstreckungsebene der Windschutzscheibe.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Fig. 1: eine Draufsicht einer Ausführungsform einer Kraftfahrzeuganordnung in einem Vormontagezustand;
- Fig. 2: die Kraftfahrzeuganordnung gemäß Fig. 1 in einem Endmontagezustand und in einem Querschnitt längs einer in Fig. 1 mit II - II bezeichneten Schnittebene in vergrößerter Darstellung; und
- Fig. 3 bis 7: der Fig. 2 entsprechende Ansichten weiterer Ausführungsformen einer Kraftfahrzeuganordnung.

Eine Kraftfahrzeuganordnung ist in der Zeichnung insgesamt mit dem Bezugszeichen 10 bezeichnet. Sie umfasst eine Windschutzscheibe 12 eines Kraftfahrzeugs, die sich zwischen einem oberen Rand 14 und einem unteren Rand 16 und zwischen seitlichen Rändern 18, 20 erstreckt. An dem unteren Rand 16 der Windschutzscheibe 12 ist eine Profilleiste 22 befestigt. An die Profilleiste 22 grenzt eine Wasserkastenabdeckung 24 an.

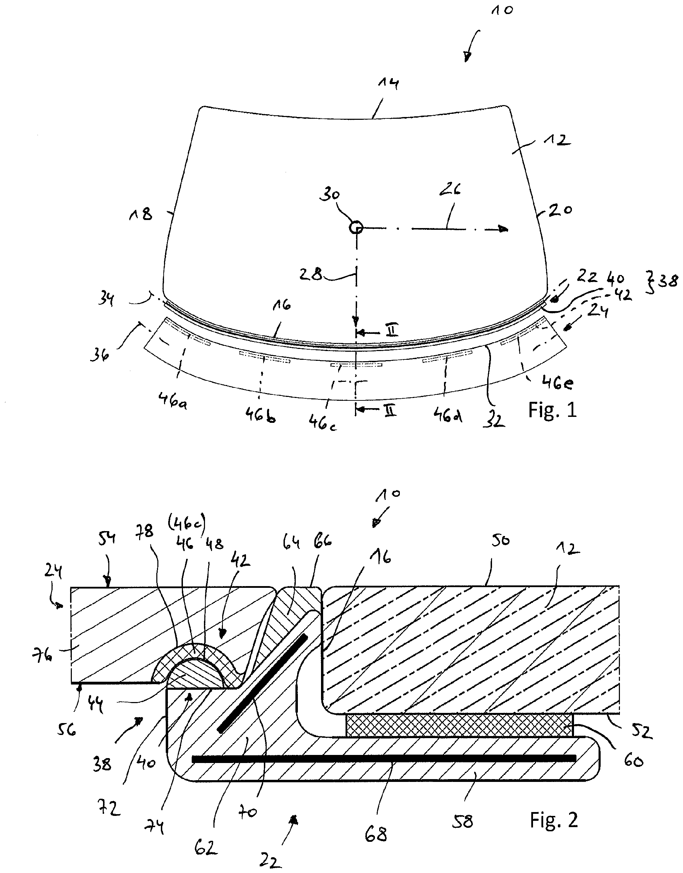

Zur Verdeutlichung der Einbaulage der Kraftfahrzeuganordnung 10 an einem Kraftfahrzeug sind in Figur 1 Achsen eingezeichnet, wobei eine erste Achse 26 eine Querachse der Kraftfahrzeuganordnung 10 und des Kraftfahrzeugs bildet, eine hierzu senkrechte Achse 28 eine Längsachse der Kraftfahrzeuganordnung 10 und eine zu den Achsen 26 und 28 senkrechte Achse 30 eine Hochachse der Kraftfahrzeuganordnung 10. Die Achsen 26 und 28 spannen eine Ebene auf, die im Wesentlichen der Erstreckungsebene der Windschutzscheibe entspricht; die Hochachse 30 verläuft senkrecht zu dieser Erstreckungsebene.

Die Profilleiste 22 und zumindest eine der Windschutzscheibe 12 zugewandte Berandung 32 der Wasserkastenabdeckung 24 verlaufen parallel zu dem unteren Rand 16 der Windschutzscheibe 12. Dieser Verlauf ist gekrümmt. Dementsprechend weisen auch die in Figur 1 angedeuteten Längsachsen 34 bzw. 36 der Profilleiste 22 bzw. der Wasserkastenabdeckung 24 einen gekrümmten Verlauf auf.

Zur Verbindung der Profilleiste 22 und der Wasserkastenabdeckung 24 ist eine Verbindungseinrichtung 38 vorgesehen, mit einem ersten, der Profilleiste 22 zugeordneten Verbindungsabschnitt 40 und mit einem zweiten, der Wasserkastenabdeckung zugeordneten Verbindungsabschnitt 42.

Der erste Verbindungsabschnitt 40 ist strangförmig ausgebildet und erstreckt sich einstückig entlang der gesamten Länge der Profilleiste 22. Der erste Verbindungsabschnitt 40 ist im Profil halbkreisförmig (vgl. Figur 2) und durch ein erstes Magnetelement 44 gebildet.

Der zweite Verbindungsabschnitt 42 ist durch ein zweites Magnetelement 46 gebildet. Das zweite Magnetelement 46 ist schalenförmig ausgebildet und weist eine dem ersten Magnetelement 44 zugewandte, konkav gekrümmte Begrenzungsfläche 48 auf. Das zweite Magnetelement 46 weist entlang der Längsachse 36 der Wasserkastenabdeckung 24 gesehen eine Mehrzahl von Magnetelementsegmenten 46a, 46b, 46c, 46d, 46e auf, vgl. Figur 1. Die Magnetelementsegmente 46a bis 46e sind entlang der Längsachse 36 gesehen verteilt angeordnet, insbesondere regelmäßig verteilt angeordnet.

Nachfolgend wird auf Figur 2 Bezug genommen. Die Windschutzscheibe 12 erstreckt sich zwischen einer Außenseite 50 und einer Innenseite 52. Die Wasserkastenabdeckung 24 erstreckt sich zwischen einer Außenfläche 54 und einer Innenfläche 56. Die Profilleiste 22 weist einen stegförmigen Befestigungsabschnitt 58 auf, der sich parallel zu der Unterseite 52 der Windschutzscheibe 12 erstreckt und mittels einer Verklebung 60 mit der Windschutzscheibe 12 verbunden ist.

Die Profilleiste 22 weist ferner einen im Querschnitt massiven Hauptkörper 62 auf, der an seiner Oberseite einen Dichtungsabschnitt 64 trägt. Der Dichtungsabschnitt 64 weist eine Außenfläche 66 auf. Es ist bevorzugt, dass die Außenseite 50 der Windschutzscheibe 12, die Außenfläche 66 des Dichtungsabschnitts 64 und die Außenfläche 54 der Wasserkastenabdeckung 24 miteinander bündig sind.

Die Profilleiste 22 ist aus einem elastischen Kunststoffmaterial hergestellt. Zur Versteifung der Profilleiste 22 können insbesondere metallische Verstärkungseinlagen 68, 70 vorgesehen sein.

Der Hauptkörper 62 weist eine seitliche Begrenzungsfläche 72 auf, die parallel zu dem unteren Rand 16 der Windschutzscheibe 12 verläuft. Die seitliche Begrenzungsfläche 72 dient in einem Zustand, in welchem die Wasserkastenabdeckung 24 noch nicht mit der Profilleiste 22 verbunden ist (vgl. Figur 1), als Aufstellfläche für einen "stehenden" Transport einer Baugruppe, welche die Windschutzscheibe 12 und die daran befestigte Profilleiste 22 umfasst.

Der Hauptkörper 62 weist ferner eine obere Begrenzungsfläche 74 auf, an welcher das erste Magnetelement 44 angeordnet ist.

Die Wasserkastenabdeckung 24 weist einen sich zwischen der Außenfläche 54 und der Innenfläche 56 erstreckenden Hauptkörper 76 aus einem Kunststoffmaterial auf. Der Hauptkörper 76 weist auf der der Außenfläche 54 abgewandten Unterseite eine konkav gekrümmte Aufnahmefläche 78 zur Aufnahme des zweiten Magnetelements 46 bzw. jeweils eines Magnetelementsegments (46a bis 46e) auf.

Bei den Magnetelementen 44 bzw. 46 kann es sich um mit den jeweiligen Hauptkörpern 62, 76 einstückig verbundene oder integral ausgebildete Materialabschnitte handeln, die mit einem magnetischen oder magnetisierbaren Zusatzwerkstoff versehen sind. Die Magnetelemente 44 oder 46 können aber auch als Zusatzelement bereitgestellt sein und mit jeweiligen Begrenzungsflächen 74 bzw. 78 der Hauptkörper 62 bzw. 76 verbunden werden, beispielsweise durch Form- oder Stoffschluss (Kleben).

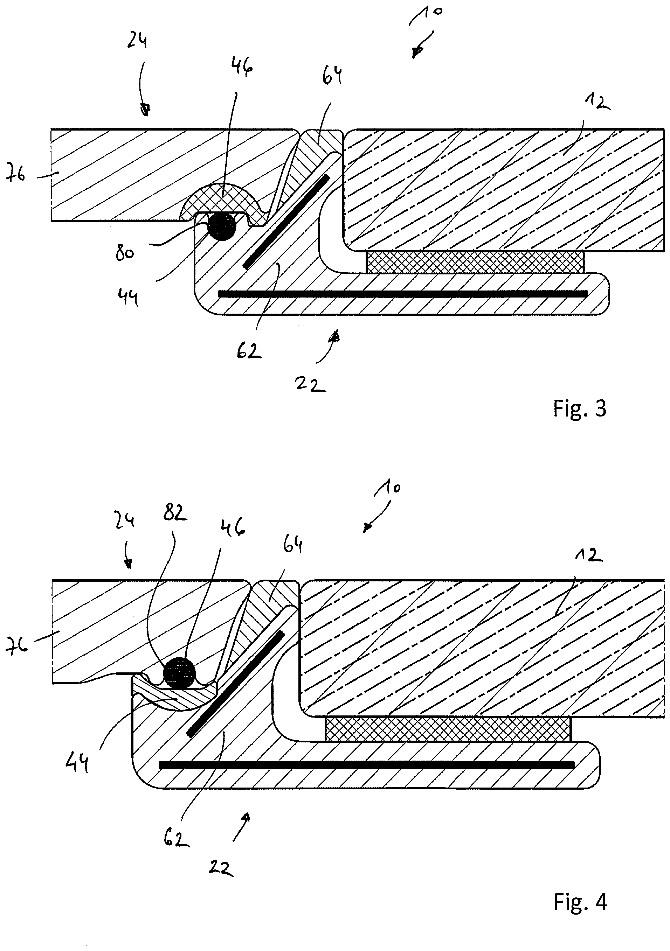

Nachfolgend diskutierte weitere Ausführungsformen von Kraftfahrzeuganordnungen 10 sind hinsichtlich ihres Aufbaus und ihrer Funktionsweise vergleichbar mit der vorstehend unter Bezugnahme auf Figuren 1 und 2 beschriebenen Ausführungsform. Es wird daher bezüglich der Figuren 3 bis 7 auf die vorstehende Beschreibung zu Figuren 1 und 2 Bezug genommen. Nachfolgend werden die Besonderheiten der Ausführungsformen der Kraftfahrzeuganordnungen 10 gemäß Figuren 3 bis 7 erörtert.

Die in Figuren 3 und 4 dargestellten Ausführungsformen weisen mindestens ein Magnetelement 44, 46 auf, welches als strangförmiges Zusatzelement bereitgestellt ist, beispielsweise in Form eines magnetisierbaren Drahts. Hierbei handelt es sich bei der Ausführungsform gemäß Figur 3 um das erste Magnetelement 44 und bei der Ausführungsform gemäß Figur 4 um das zweite Magnetelement 46.

Bei der Ausführungsform gemäß Figur 3 ist das erste Magnetelement 44 formschlüssig rastend in einer nutförmigen Aufnahme 80 des Hauptkörpers 62 der Profilleiste 22 aufgenommen.

Bei der in Figur 4 dargestellten Ausführungsform ist das zweite Magnetelement 46 formschlüssig rastend in einer U-förmigen Aufnahme 82 des Hauptkörpers 76 der Wasserkastenabdeckung 24 aufgenommen.

Bei den in den Figuren 3 und 4 dargestellten Ausführungsformen berühren das erste Magnetelement 44 und das zweite Magnetelement 46 einander.

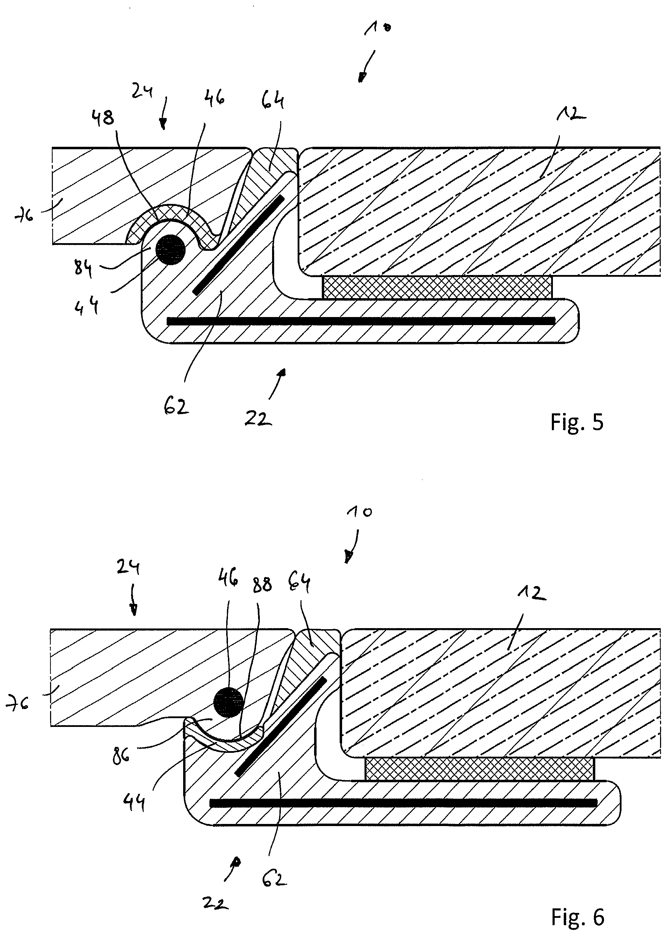

In den Figuren 5 und 6 sind Ausführungsformen dargestellt, bei welchen Magnetelemente 44 und 46 zueinander beabstandet sind.

Bei der in Figur 5 dargestellten Ausführungsform ist ein strangförmiges, erstes Magnetelement 44 vorgesehen, das in Umfangsrichtung von einem Umhüllungsabschnitt 84 des Hauptkörpers 62 der Profilleiste 22 umhüllt ist. Auf diese Weise ist eine konkav gekrümmte Begrenzungsfläche 48 des zweiten Magnetelements 46 zu dem ersten Magnetelement 44 beabstandet.

Bei der in Figur 6 dargestellten Ausführungsform ist ein strangförmiges zweites Magnetelement 46 von einem Umhüllungsabschnitt 86 des Hauptkörpers 76 der Wasserkastenabdeckung 24 umhüllt, so dass das zweite Magnetelement 46 von einer konkaven Begrenzungsfläche 88 des ersten Magnetelements 44 zu dem zweiten Magnetelement 46 beabstandet ist.

Die vorstehend unter Bezugnahme auf Figuren 5 und 6 genannten Umhüllungsabschnitte 84 bzw. 86 liegen mit ihrer Außenfläche formschlüssig an der konkaven Begrenzungsfläche 48 des zweiten Magnetelements 46 (vgl. Figur 5) bzw. 88 des ersten Magnetelements 44 (vgl. Figur 6) an. Auf diese Weise wird ein in Richtung der Längsachse 28 (vgl. Figur 1) wirksamer Formschluss zwischen der Wasserkastenabdeckung 24 und der Profilleiste 22 erzeugt.

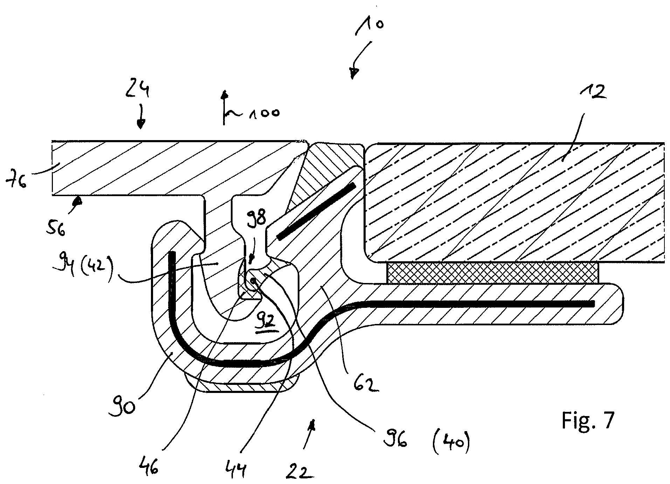

Nachfolgend wird Bezug genommen auf Figur 7. Die Kraftfahrzeuganordnung 10 gemäß Figur 7 umfasst eine Profilleiste 22 mit einem Hauptkörper 62, der gemeinsam mit einem Schenkel 90 einen U-förmigen Aufnahmebereich 92 begrenzt. Dieser Aufnahmebereich 92 dient zur Aufnahme eines Befestigungsstegs 94, welcher von der Unterseite 56 des Hauptkörpers 76 der Wasserkastenabdeckung 24 abragt.

Die Profilleiste 22 gemäß Figur 7 weist außerdem ein Rastelement 96 auf, das als Rastlippe ausgebildet ist. Im Sinne der vorliegenden Erfindung bildet das Rastelement 96 einen ersten Verbindungsabschnitt 40; der Befestigungssteg 94 der Wasserkastenabdeckung 24 bildet einen zweiten Verbindungsabschnitt 42.

Das Rastelement 96 ist zumindest in einem Teilbereich mit einem ersten Magnetelement 44 versehen, welches sich in Längsrichtung der Profilleiste 22 erstreckt. Dabei kann es sich um einen magnetischen oder magnetisierbaren Draht handeln, der beispielsweise im Wege des Extrusionsverfahrens in das Rastelement 96 eingebracht ist.

Der Befestigungssteg 94 weist eine Rastelementaufnahme 98 zur formschlüssigen Aufnahme des Rastelements 96 auf. Die Rastelementaufnahme 98 ist in zumindest einem Teilbereich mit einem zweiten Magnetelement 46 versehen. Dieses ist beispielsweise im Querschnitt L-förmig oder kreisbogenförmig. Das zweite Magnetelement 46 kann beispielsweise durch einen Zusatz von ferromagnetischen Partikeln in dem Kunststoffmaterial des Befestigungsstegs 94 gebildet sein.

Die in Figur 7 dargestellte Anordnung ermöglicht eine Mehrfachverbindung mit Formschluss zwischen Wasserkastenabdeckung 24 und Profilleiste 22 und darüber hinaus mit magnetischen Haltekräften.

Darüber hinaus wirkt der Formschluss auch entlang der Hochachse 30, entgegengesetzt zu einer in Figur 7 dargestellten Auszugsrichtung 100 der Wasserkastenabdeckung 24.

Bei der in Figur 7 dargestellten Ausführungsform sind die Magnetelemente 44 und 46 zueinander beabstandet. Es ist aber auch möglich, dass das Magnetelement 44 des Rastelements 96 das zweite Magnetelement 46 des Befestigungsstegs 94 kontaktiert. Ebenso ist es möglich, dass das zweite Magnetelement 46 bezogen auf eine Kontaktfläche zu dem Rastelement 96 in das Material hineinversetzt ist.

Das Rastelement 96 ist vorzugsweise aus einem weichelastischen Material hergestellt. Dieses Material kann eine höhere Elastizität aufweisen als ein Kunststoffmaterial des Hauptkörpers 62 der Profilleiste 22. Es ist auch möglich, das lippenförmige Rastelement 96 vollständig aus einem magnetischen oder magnetisierbaren Material herzustellen, entweder durch Beigabe eines Zusatzwerkstoffs in ein Kunststoffmaterial oder dadurch, dass das Rastelement 96 insgesamt aus einem metallischen Material hergestellt ist, das magnetisch oder magnetisierbar ist.

## Patentansprüche

1. Kraftfahrzeuganordnung (10), umfassend eine Windschutzscheibe (12), eine an der Windschutzscheibe (12) befestigte Profilleiste (22) und eine an die Profilleiste (22) angrenzende Wasserkastenabdeckung (24), wobei eine Verbindungseinrichtung (38) vorgesehen ist, die einen ersten, der Profilleiste (22) zugeordneten Verbindungsabschnitt (40) und einen zweiten, der Wasserkastenabdeckung (24) zugeordneten Verbindungsabschnitt (42) umfasst, wobei der erste Verbindungsabschnitt (40) mindestens ein erstes Magnetelement (44) aufweist oder durch ein solches gebildet ist, wobei der zweite Verbindungsabschnitt (42) mindestens ein zweites Magnetelement (46) aufweist oder durch ein solches gebildet ist, wobei zur Verbindung der Profilleiste (22) und der Wasserkastenabdeckung (24) das erste Magnetelement (44) und das zweite Magnetelement (46) magnetisch miteinander zusammenwirken, **dadurch gekennzeichnet, dass** das erste Magnetelement (44) eine konkav gekrümmte, dem zweiten Magnetelement (46) zugewandte Begrenzungsfläche (88) aufweist oder dass das zweite Magnetelement (46) eine konkav gekrümmte, dem ersten Magnetelement (44) zugewandte Begrenzungsfläche (48) aufweist.

2. Kraftfahrzeuganordnung (10) nach Anspruch 1, **dadurch gekennzeichnet, dass** sich - in einem Zustand, in welchem die Verbindungsabschnitte (40, 42) miteinander verbunden sind - die Magnetelemente (44, 46) berühren.

3. Kraftfahrzeuganordnung (10) nach Anspruch 1, **dadurch gekennzeichnet, dass** - in einem Zustand, in welchem die Verbindungsabschnitte (40, 42) miteinander verbunden sind - die Magnetelemente (44, 46) voneinander beabstandet sind.

4. Kraftfahrzeuganordnung (10) nach einem der voranstehenden Ansprüche, **dadurch gekennzeichnet, dass** das erste Magnetelement (44) als erstes Zusatzelement separat von der Profilleiste (22) bereitgestellt und insbesondere formschlüssig mit der Profilleiste (22) verbunden ist und/oder dass das zweite Magnetelement (46) als zweites Zusatzelement separat von der Wasserkastenabdeckung (24) bereitgestellt und insbesondere formschlüssig mit der Wasserkastenabdeckung (24) verbunden ist.

5. Kraftfahrzeuganordnung (10) nach einem der voranstehenden Ansprüche, **dadurch gekennzeichnet, dass** die Profilleiste (22) und/oder die Wasserkastenabdeckung (24) einen aus einem Kunststoffmaterial hergestellten Hauptkörper (62, 76) und einen Materialabschnitt aufweist bzw. aufweisen, der bzw. die mit einem magnetischen oder magnetisierbaren Zusatzwerkstoff versehen oder durch einen solchen gebildet ist bzw. sind.

6. Kraftfahrzeuganordnung (10) nach einem der voranstehenden Ansprüche, **dadurch gekennzeichnet, dass** das erste Magnetelement (44) strangförmig ist und sich parallel zu der Längsachse (34) der Profilleiste (22) erstreckt und/oder dass das zweite Magnetelement (46) strangförmig ist und sich parallel zu der Längsachse (36) der Wasserkastenabdeckung (24) erstreckt.

7. Kraftfahrzeuganordnung (10) nach einem der voranstehenden Ansprüche, **dadurch gekennzeichnet, dass** das erste Magnetelement (44) entlang der Längsachse (34) der Profilleiste (22) gesehen einstückig ist oder eine Mehrzahl von Magnetelementsegmenten aufweist und/oder dass das zweite Magnetelement (46) entlang der Längsachse (36) der Wasserkastenabdeckung (24) gesehen einstückig ist oder eine Mehrzahl von Magnetelementsegmenten (46a bis 46e) aufweist.

8. Kraftfahrzeuganordnung (10) nach Anspruch 7, **dadurch gekennzeichnet, dass** entlang der Längsachsen (34, 36) der Profilleiste (22) und der Wasserkastenabdeckung (24) gesehen mindestens zwei zueinander beabstandete Paare von Magnetelementsegmenten vorgesehen sind, wobei jedes Paar miteinander magnetisch zusammenwirkende Magnetelementsegmente aufweist, von denen ein erstes Magnetelementsegment der Profilleiste (22) und ein zweites Magnetelementsegment der Wasserkastenabdeckung (24) zugeordnet ist.

9. Kraftfahrzeuganordnung (10) nach Anspruch 8, **dadurch gekennzeichnet, dass** zumindest ein erstes Paar von Magnetelementsegmenten vorgesehen ist, deren Magnetelementsegmente gleichgerichtete erste Magnetisierungsrichtungen aufweisen, und dass zumindest ein zweites Paar von Magnetelementsegmenten vorgesehen ist, deren Magnetelementsegmente gleichgerichtete zweite Magnetisierungsrichtungen aufweisen und dass die ersten Magnetisierungsrichtungen entgegengesetzt zu den zweiten Magnetisierungsrichtungen verlaufen.

10. Kraftfahrzeuganordnung (10) nach einem der voranstehenden Ansprüche, **dadurch gekennzeichnet, dass** die Verbindungsabschnitte (40, 42) miteinander formschlüssig verbindbar oder verbunden sind.

11. Kraftfahrzeuganordnung (10) nach einem der voranstehenden Ansprüche, **dadurch gekennzeichnet, dass** das erste Magnetelement (44) und das zweite Magnetelement (46) miteinander formschlüssig verbindbar oder verbunden sind.

12. Kraftfahrzeuganordnung (10) nach Anspruch 10 oder 11, **dadurch gekennzeichnet, dass** der Formschluss entlang einer Längsachse (28) und/oder einer Querachse (26) der Kraftfahrzeuganordnung (10) wirksam ist, wobei die Längsachse (28) und die Querachse (26) sich auf den an einem Kraftfahrzeug eingebauten Zustand der Windschutzscheibe (12) beziehen.

13. Kraftfahrzeuganordnung (10) nach einem der Ansprüche 10 bis 12, **dadurch gekennzeichnet, dass** der Formschluss entlang einer Hochachse (30) der Kraftfahrzeuganordnung (10) wirksam ist, wobei die Hochachse (30) sich auf den an einem Kraftfahrzeug eingebauten Zustand der Windschutzscheibe (12) bezieht.

## Claims

1. Motor vehicle arrangement (10), comprising a windshield (12), a profile strip (22) fastened to the windshield (12) and a water tank cover (24) adjoining the profile strip (22), a connecting device (38) being provided which has a first connecting portion (40) associated with the profile strip (22) and a second connecting portion (42) associated with the water tank cover (24), the first connecting portion (40) having at least one first magnetic element (44) or being formed by such a magnetic element, the second connecting portion (42) having at least one second magnetic element (46) or being formed by such a magnetic element, the first magnetic element (44) and the second magnetic element (46) magnetically interacting with one another in order to connect the profile strip (22) and the water tank cover (24), **characterized in that** the first magnetic element (44) has a concavely curved boundary surface (88) facing the second magnetic element (46) or **in that** the second magnetic element (46) has a concavely curved boundary surface (48) facing the first magnetic element (44).

2. Motor vehicle arrangement (10) according to claim 1, **characterized in that**, in a state in which the connecting portions (40, 42) are connected to one another, the magnetic elements (44, 46) touch one another.

3. Motor vehicle arrangement (10) according to claim 1, **characterized in that**, in a state in which the connecting portions (40, 42) are connected to one another, the magnetic elements (44, 46) are spaced apart from one another.

4. Motor vehicle arrangement (10) according to any of the preceding claims, **characterized in that** the first magnetic element (44) is provided as a first additional element separately from the profile strip (22) and in particular is interlockingly connected to the profile strip (22) and/or **in that** the second magnetic element (46) is provided as a second additional element separately from the water tank cover (24) and in particular is interlockingly connected to the water tank cover (24).

5. Motor vehicle arrangement (10) according to any of the preceding claims, **characterized in that** the profile strip (22) and/or the water tank cover (24) has or have a main body (62, 76) made of a plastics material, and a material portion, which is or are provided with a magnetic or magnetizable filler material or is or are formed by such a material.

6. Motor vehicle arrangement (10) according to any of the preceding claims, **characterized in that** the first magnetic element (44) is strand-shaped and extends parallel to the longitudinal axis (34) of the profile strip (22) and/or **in that** the second magnetic element (46) is strand-shaped and extends parallel to the longitudinal axis (36) of the water tank cover (24).

7. Motor vehicle arrangement (10) according to any of the preceding claims, **characterized in that** the first magnetic element (44), viewed along the longitudinal axis (34) of the profile strip (22), is in one piece or has a plurality of magnetic element segments and/or **in that** the second magnetic element (46), viewed along the longitudinal axis (36) of the water tank cover (24), is in one piece or has a plurality of magnetic element segments (46a to 46e).

8. Motor vehicle arrangement (10) according to claim 7, **characterized in that**, viewed along the longitudinal axes (34, 36) of the profile strip (22) and the water tank cover (24), at least two mutually spaced pairs of magnetic element segments are provided, each pair having magnetically interacting magnetic element segments, of which a first magnetic element segment is associated with the profile strip (22) and a second magnetic element segment is associated with the water tank cover (24).

9. Motor vehicle arrangement (10) according to claim 8, **characterized in that** at least one first pair of magnetic element segments is provided of which the magnetic element segments have first directions of magnetization in the same direction, and **in that** at least one second pair of magnetic element segments is provided of which the magnetic element segments have second directions of magnetization in the same direction, and **in that** the first directions of magnetization extend counter to the second directions of magnetization.

10. Motor vehicle arrangement (10) according to any of the preceding claims, **characterized in that** the connecting portions (40, 42) can be or are interlockingly connected to one another.

11. Motor vehicle arrangement (10) according to any of the preceding claims, **characterized in that** the first magnetic element (44) and the second magnetic element (46) can be or are interlockingly connected to one another.

12. Motor vehicle arrangement (10) according to claim 10 or claim 11, **characterized in that** the interlocking engagement is effective along a longitudinal axis (28) and/or a transverse axis (26) of the motor vehicle arrangement (10), the longitudinal axis (28) and the transverse axis (26) relating to the state of the windshield (12) installed on a motor vehicle.

13. Motor vehicle arrangement (10) according to any of claims 10 to 12, **characterized in that** the interlocking engagement is effective along a vertical axis (30) of the motor vehicle arrangement (10), the vertical axis (30) relating to the state of the windshield (12) installed on a motor vehicle.

## Revendications

1. Ensemble de véhicule automobile (10), comprenant un pare-brise (12), une baguette profilée (22) fixée au pare-brise (12) et une couverture de réservoir d'eau (24) contiguë à la baguette profilée (22), dans lequel un dispositif de liaison (38) est prévu qui comprend une première section de liaison (40) associée à la baguette profilée (22) et une deuxième section de liaison (42) associée à la couverture de réservoir d'eau (24), dans lequel la première section de liaison (40) présente au moins un premier élément magnétique (44) ou est formée par un tel élément, dans lequel la deuxième section de liaison (42) comprend au moins un deuxième élément magnétique (46) ou est formée par un tel élément, dans lequel ledit premier élément magnétique (44) et ledit deuxième élément magnétique (46) agissent de concert magnétiquement l'un avec l'autre pour relier la baguette profilée (22) et la couverture de réservoir d'eau (24), **caractérisé par le fait que** le premier élément magnétique (44) présente une surface de délimitation (88) qui est incurvée de manière concave et montre en direction du deuxième élément magnétique (46) ou que le deuxième élément magnétique (46) présente une surface de délimitation (48) qui est incurvée de manière concave et montre en direction du premier élément magnétique (44).

2. Ensemble de véhicule automobile (10) selon la revendication 1, **caractérisé par le fait que** - dans un état dans lequel les sections de liaison (40, 42) sont reliées les unes aux autres - les éléments magnétiques (44, 46) se touchent.

3. Ensemble de véhicule automobile (10) selon la revendication 1, **caractérisé par le fait que** - dans un état dans lequel les sections de liaison (40, 42) sont reliées les unes aux autres - les éléments magnétiques (44, 46) sont espacés les uns des autres.

4. Ensemble de véhicule automobile (10) selon l'une quelconque des revendications précédentes, **caractérisé par le fait que** le premier élément magnétique (44) est fourni en tant que premier élément supplémentaire séparément de la baguette profilée (22) et, en particulier, est relié à engagement positif à la baguette profilée (22), et/ou que le deuxième élément magnétique (46) est fourni en tant que deuxième élément supplémentaire séparément de la couverture de réservoir d'eau (24) et, en particulier, est relié à engagement positif à la couverture de réservoir d'eau (24) .

5. Ensemble de véhicule automobile (10) selon l'une quelconque des revendications précédentes, **caractérisé par le fait que** la baguette profilée (22) et/ou la couverture de réservoir d'eau (24) présente ou bien présentent un corps principal (62, 76) réalisé à partir d'une matière plastique ainsi qu'un tronçon de matériau qui est ou bien sont pourvu(s) d'un matériau supplémentaire magnétique ou magnétisable ou qui est ou bien sont formé(s) par un tel matériau supplémentaire.

6. Ensemble de véhicule automobile (10) selon l'une quelconque des revendications précédentes, **caractérisé par le fait que** le premier élément magnétique (44) est en forme de brin et s'étend parallèlement à l'axe longitudinal (34) de la baguette profilée (22) et/ou que le deuxième élément magnétique (46) est en forme de brin et s'étend parallèlement à l'axe longitudinal (36) de la couverture de réservoir d'eau (24).

7. Ensemble de véhicule automobile (10) selon l'une quelconque des revendications précédentes, **caractérisé par le fait que** le premier élément magnétique (44), vu selon l'axe longitudinal (34) de la baguette profilée (22), est d'une seule pièce ou comprend une pluralité de segments d'élément magnétique et/ou que le deuxième élément magnétique (46), vu le long de l'axe longitudinal (36) de la couverture de réservoir d'eau (24), est d'une seule pièce ou comprend une pluralité de segments d'élément magnétique (46a à 46e).

8. Ensemble de véhicule automobile (10) selon la revendication 7, **caractérisé par le fait que**, vu selon les axes longitudinaux (34, 36) de la baguette profilée (22) et de la couverture de réservoir d'eau (24), au moins deux paires de segments d'élément magnétique espacées les unes des autres sont prévues, dans lequel chaque paire comprend des segments d'élément magnétique qui coopèrent magnétiquement les uns avec les autres et dont un premier segment d'élément magnétique est associé à la baguette profilée (22) et un deuxième segment d'élément magnétique est associé à la couverture de réservoir d'eau (24).

9. Ensemble de véhicule automobile (10) selon la revendication 8, **caractérisé par le fait qu'**au moins une première paire de segments d'élément magnétique est prévue, dont les segments d'élément magnétique présentent des premières directions d'aimantation dirigées de manière identique, et qu'au moins une deuxième paire de segments d'élément magnétique est prévue, dont les segments d'élément magnétique présentent des deuxièmes directions d'aimantation dirigées de manière identique, et que les premières directions d'aimantation sont opposées aux deuxièmes directions d'aimantation.

10. Ensemble de véhicule automobile (10) selon l'une quelconque des revendications précédentes, **caractérisé par le fait que** les sections de liaison (40, 42) peuvent être ou sont reliées les unes aux autres à engagement positif.

11. Ensemble de véhicule automobile (10) selon l'une quelconque des revendications précédentes, **caractérisé par le fait que** le premier élément magnétique (44) et le deuxième élément magnétique (46) peuvent être ou sont reliés l'un à l'autre à engagement positif.

12. Ensemble de véhicule automobile (10) selon la revendication 10 ou 11, **caractérisé par le fait que** l'engagement positif est efficace selon un axe longitudinal (28) et/ou un axe transversal (26) de l'ensemble de véhicule automobile (10), dans lequel l'axe longitudinal (28) et l'axe transversal (26) se réfèrent à l'état où le pare-brise (12) est installé sur un véhicule automobile.

13. Ensemble de véhicule automobile (10) selon l'une quelconque des revendications 10 à 12, **caractérisé par le fait que** l'engagement positif est efficace selon un axe vertical (30) de l'ensemble de véhicule automobile (10), dans lequel l'axe vertical (30) se réfère à l'état où le pare-brise (12) est installé sur un véhicule automobile.
